# EUROPÄISCHE PATENTSCHRIFT

(11) **EP 1 755 818 B1**
(45) Veröffentlichungstag und Bekanntmachung des Hinweises auf die Patenterteilung: **21.07.2010**
(21) Anmeldenummer: 05750490.4
(22) Anmeldetag: 17.06.2005
(51) Int. Cl.: B23K 26/28, B21D 51/26

(54) **VERFAHREN ZUM HERSTELLEN EINES DOSENKÖRPERS, SOWIE DOSENKÖRPER**
METHOD FOR THE PRODUCTION OF A CAN BODY, AND CAN BODY
PROCEDE POUR PRODUIRE UN CORPS DE CONTENANT, ET CORPS DE CONTENANT

(30) Priorität: 17.06.2004 WO PCT/CH2004/000368; 14.01.2005 WO PCT/CH2005/000016
(43) Veröffentlichungstag der Anmeldung: 28.02.2007
(73) Patentinhaber: CREBOCAN AG, 9606 Bütschwil (CH)
(72) Erfinder: BOLTSHAUSER, Werner, CH-9606 Bütschwil (CH)
(74) Vertreter: Büchel, von Révy & Partner
(86) Internationale Anmeldenummer: PCT/CH2005/000341
(87) Internationale Veröffentlichungsnummer: WO 2005/123323

(56) Entgegenhaltungen:
- WO-A-00/35772
- WO-A-2005/000498
- WO-A-2005/068127

## Beschreibung

Die Erfindung bezieht sich auf ein Verfahren zum Festsetzen eines Ventils an einem Dosenmantel und auf einen Dosenkörper nach dem Oberbegriff des Anspruches 5.

Aerosoldosen sind ein- oder mehrteilig ausgebildet. Bei einteiligen Aerosol-Aludosen wird der zylindrische Dosenkörper mittels Kaltfliesspressen bereitgestellt. Anschliessend wird am offenen Ende mittels Stauch-Necking ein Ventilsitz ausgebildet. Dieses Herstellungsverfahren ist aufgrund der für-die vielen Bearbeitungsschritte benötigten Anlage und dem Wasser- sowie Energiebedarf für Reinigung und Trocknung sehr aufwendig. Die US 4 095 544 und die EP 0 666 124 A1 beschreiben das Herstellen nahtfreier Stahldosen. Dabei wird der zylindrische Dosenkörper mittels Stanzen, Pressen und Abstrecken aus einem mit Zinn bzw. mit Kunststoff beschichteten Stahlblech hergestellt. Es hat sich gezeigt, dass beim Ausbilden von verengten Halsteilen enorme Probleme auftreten, weil die Materialstruktur durch das Abstrecken verändert bzw. verhärtet ist. Stark verbreitet sind auch Dosen aus Stahlblech, bei denen der Mantel eine Längs-Schweissnaht aufweist. Der Boden und der obere Abschluss sind über Falzverbindungen am Dosenmantel befestigt. Bei Falzverbindungen können Dichtungsprobleme auftreten, die etwa mit Dichtungsringen reduziert werden. Bei den gängigen äusserst dünnwandigen Dosen ergeben sich mit stirnseitig angeordneten Dichtungen Probleme. Aus den Schriften EP 200 098 A2 und EP 208 564 sind zwei- und mehrteilige Dosen bekannt, bei denen die Teile mittels Laserschweissen verbunden sind. Die durch die bekannten Laser-Schweissnähte vorgegebene Formgestaltung der Dosen in den Verbindungsbereichen zwischen Dosenwand und Boden bzw. Ventilsitz sind unattraktiv und zudem kann mit den bekannten Verfahren keine kostengünstige Produktion mit genügenden hohen Stückzahlen pro Zeiteinheit erzielt werden. Die beschriebenen Längsschweissnähte, insbesondere auch die aus der US 4 341 943 bekannten Laser-Schweissnähte, weisen in Umfangsrichtung kleine Stufen bzw. Dickenunterschiede auf, welche beim Festschweissen der Abschlusselemente zu Probleme führen können.

Beim Festsetzen von Ventilen an Aerosoldosen wird am Dosenkörper ein Ventilsitz bereitgestellt. Am Ventilsitz wird eine Verbindungsschale mit dem Ventil festgekrimmt. Wenn der Ventilsitz mittels verengen und umformen des Dosenmantels ausgebildet wird, so bilden sich am Ventilsitz Haarrisse, welche nach dem Festcrimpen der Verbindungsschale zu unerwünschten Mikroleckagen führen können. Auch bei einem Ventilsitz, der getrennt vom Dosenmantel an einem Abschlusselement ausgebildet wird, könnten Haarrisse auftreten. Selbst wenn keine Haarrisse auftreten, so ist doch das Festcrimpen der Verbindungsschale am Ventilsitz ein aufwendiger Bearbeitungsschritt. Zudem wird für Aerosoldosen mit unterschiedlich grossen Durchmessern ein Ventilsitz mit Standarddurchmesser verwendet, was bei kleinen Dosen bewirkt, dass ein minimaler Dosendurchmesser nicht unterschritten werden kann.

Die internationale Anmeldung WO 00/35772 beschreibt Aerosoldosen, bei denen das Abschlusselement mitsamt dem Ventil am Dosenmantel fest geschweisst wird, wobei eine Laser-Schweissnaht ausgebildet wird. Die FR 2 543 923 beschreibt eine Dose, bei der ein Dosenabschluss mit dem Ventilsitz mittels Laserschweissen am Dosenmantel befestigt wird. Diese Lösungen umfassen bei den Schweissnähten zylindrische oder radial zur Dosenachse nach aussen stehende Flansche bzw. Naht-Kontaktbereiche, die das Erscheinungsbild der Dosen unattraktiv prägen. Die Stirnseiten der beiden miteinander verbundenen Verbindungs-Flansche stehen beim Schweissen vom Dosenkörper nach aussen vor. Das Umformen der Flansche nach dem Schweissen ist äusserst aufwendig, weil die Schweissnaht bei den Flanschen eine hohe Formstabilität erzeugt. Selbst umgeformte Flansche sind bei vielen Aerosoldosen, beispielsweise im Kosmetikbereich und insbesondere bei kleinen Dosendurchmessern, unerwünscht.

Der vorliegenden Erfindung liegt die Aufgabe zugrunde, eine Lösung zu finden mit der ästhetisch attraktive Dosen kostengünstig hergestellt werden können.

Diese Aufgabe wird durch die Merkmale des Anspruches 1 und des Anspruches 5 gelöst. Die abhängigen Ansprüche beschreiben bevorzugte bzw. alternative Ausführungsformen.

Beim Lösen der Aufgabe wurde in einem ersten erfinderischen Schritt erkannt, dass der Aufbau mit Ventilsitz und Ventil mit Verbindungsschale davon herrührt, dass die Ventile beim Abfüller auf die Aerosoldosen aufgesetzt werden, um eine Befüllung vor dem Aufsetzen der Ventile zu ermöglichen. Es hat sich nun aber gezeigt, dass sehr viele Produkte durch das Ventil in die Dose eingefüllt werden. Eine Einfüllung durch einen Ringbereich zwischen Ventilsitz und Verbindungsschale und ein anschliessendes Festcrimpen ist bei vielen Produkten nicht nötig. Daher kann das Festsetzen des Ventils vor dem Befüllen durchgeführt werden.

Bei Aerosoldosen, die durch das Ventil befüllt werden, kann der obere Endbereich des Dosenmantels mit einem oberen Abschlusselement mit Ventil verbunden werden. Das Abschlusselement entspricht im Wesentlichen einer Verbindungsschale ohne Umgriffsbereich für den Ventilsitz. Das Ventil ist im Zentrum des Abschlusselementes angeordnet und das Abschlusselement ist vorzugsweise lediglich kuppelförmig ausgebildet. Mit einem Schweissschritt wird das Abschlusselement mit dem Ventil mittels Laserschweissen am Dosenmantel befestigt. Eine ringfömig geschlossenen Naht gewährleistet dann mit kleinem Aufwand eine dichte und feste Verbindung, wenn das freie Ende des Dosenmantels etwas verengt ist, so dass der daran anliegende Randbereich des Abschlusselementes dicht angepresst und mit einer Laserschweissnaht am Dosenmantel befestigt werden kann. Durch das Anordnen von Dichtungsmaterial auf der Innenseite des Dosenmantels im Bereich der Schweissnaht kann gewährleistet werden, dass nach dem Schweissen des Dosenkörpers eine vollständige Innenbeschichtung gewährleistet ist.

Die Vorteile dieser erfinderischen Lösung sind vielfältig. Beim Dosenkörper kann auf das Ausbilden oder auf des Festsetzen eines Ventilsitzes verzichtet werden und der aufwendige Crimpschritt fällt weg. Entsprechend kann beim Abfüller auf eine Anlage zum Festcrimpen von Verbindungsschalen verzichtet werden. Es können nun auch Aerosoldosen hergestellt werden, deren Durchmesser kleiner sind als der Durchmesser des Standard-Ventilsitzes.

Eine Laserschweissverbindung zwischen Dosenmantel und Abschlusselement ist dann besonders einfach auszubilden, wenn der Dosenmantel am oberen Ende eine konstante Dicke aufweist. Dies ist bei Dosenkörpern der Fall, die mittels Tiefziehen hergestellt werden, oder bei denen der Dosenmantel mit einer stumpfen Längsschweissnaht geschlossen wurde.

Mit einem schmelz- und dabei über die Naht fliessfähigen Material, vorzugsweise einem thermoplastischen Polyester, kann bei der Ringnaht zwischen dem Dosenmantel und einem Abschlusselement die Doseninnenwand abgedichtet werden. Dabei wird am Abschlusselement entlang des äusseren Randbereiches eine Ringwulst eines schmelzbaren Dichtungsmaterials angebracht. Nach dem Ausbilden der kreisförmigen Schweissnaht wird diese Ringwulst durch Erwärmen zum teilweisen Schmelzen und Fliessen gebracht, so dass sich eine Brücke zwischen der Innenbeschichtung des Abschlusselementes und der Innenfolie des Mantels bildet. Diese Brücke deckt die Stirnseite des im Doseninnern liegenden Randbereiches und bei Bedarf auch die Schweissnaht auf der Doseninnenseite vollständig ab, so dass eine Korrosion im Übergangsbereich vom Dosenmantel zum Abschlusselement ausgeschlossen werden kann.

Es gibt Produkte die nicht genügend schnell durch die Austrags- bzw. Sprühöffnung des Ventils in die Aerosoldose eingefüllt werden können. Gemäss dem Stande der Technik können diese nur in Dosen mit einem Ventilsitz eingefüllt werden, wobei das Ventil erst nach dem Einfüllen des Produktes am Ventilsitz fest gekrimmt wird. Das Treibgas wird anschliessend durch das eingesetzte Ventil eingefüllt. Wenn nun ein Abschlussteil mit daran fest gesetztem Ventil bereits mit einer Lasernaht am Dosenmantel befestigt ist, soll bei einer bevorzugten Ausführungsform trotzdem ein schnelles Einfüllen des Produktes möglich sein.

Im Rahmen eines erfinderischen Schrittes wurde erkannt, dass ein Ventilteil mit zwei unterschiedlichen Durchtrittsquerschnitten ein schnelles Einfüllen des Produktes, das Eintragen des Treibgases und das Austragen des Produktes bei dessen Verwendung ermöglicht. Die beiden Durchtrittsquerschnitte müssen gezielt eingestellt werden können. Das heisst in einem ersten Öffnungszustand ist der für das Austragen des Produktes nötige Querschnitt eingestellt. In einem zweiten Öffnungszustand ist ein grosser Öffnungsquerschnitt ausgebildet. Die gezielte Einstellung der Öffnungsquerschnitte erfolgt durch ein entsprechendes Aufpressen, wobei entweder die Presskraft unterschiedlich gross und/oder die Presskraft an unterschiedlichen Bereichen des Ventils aufgebracht wird.

Gegebenenfalls wird die Presskraft zum Erreichen des grossen Öffnungsquerschnittes über das einzutragende Fluid bereitgestellt. Weil der grosse Querschnitt nur zum Befüllen gebraucht wird, kann das Öffnen des grossen Querschnittes in der Form eines Einwegventiles ausgeführt werden. Dazu kann beispielsweise ein elastisches Dichtungselement so angeordnet werden, dass es ohne Druckbelastung und auch aufgrund des Doseninnendruckes in einer dichtenden Position ist. Von einem genügend hohen Druck, der von aussen ans Ventil angelegt wird, kann das elastische Dichtungselement in eine offene Position gedrückt werden. Ein Aerosol-Dosenventil mit einem elastischen Dichtungselement, das zum Erzielen eines grossen Öffnungsquerschnittes ausgebildet ist, kann aus der US 4 615 470 entnommen werden. Dieses bekannte Ventil ermöglicht ein schnelles Einfüllen von Treibgas.

Gemäss einer ersten Ausführungsform hat das Ventil zwei verschiedene Öffnungszustände mit unterschiedlichen Querschnitten, wobei beim Übergang vom ersten Öffnungszustand zum zweiten eine vorgegebene Öffnungs-Presskraft überschritten werden muss. Damit der zweite Öffnungszustand bei einer gefüllten Dose nicht mehr erreicht werden kann, wird nach dem Befüllen vorzugsweise ein Festsetzschritt durchgeführt, bei dem die Öffnung des Ventils auf den ersten Öffnungszustand beschränkt wird. Dies kann beispielsweise mit einer Verformung an der Verbindungsschale des Ventils erzielt werden, wobei die Verformung als Anschlag für die unerwünschte Bewegung zum zweiten Öffnungszustand verhindert.

Gemäss einer zweiten Ausführungsform ist das Ventil als Doppelventil ausgebildet und umfasst zwei getrennte Durchtrittswege mit unterschiedlich grossen Querschnitten. Der erste Durchtrittsweg wird von einem Standard-Dosenventil gebildet. Der zweite Durchtrittsweg wird zwischen einem inneren Verbindungsteil des Standardventils und einem am Dosenmantel fest geschweissten äusseren Verbindungsteil ausgebildet. Dazu kann der innere Verbindungsteil, der normalerweise als Verbindungsschale ausgebildet würde, so ausgebildet werden, dass er vom Doseninnern her gegen einen Dichtungsbereich des äusseren Verbindungsteils gepresst wird. Wenn der innere Verbindungsteil gegen das Doseninnere aufgepresst wird, so entsteht zwischen dem inneren Verbindungsteil und dem äusseren Verbindungsteil eine ringförmige Durchtrittsöffnung ins Doseninnere.

Die Federkraft gegen welche der Anschlussbereich aufgepresst werden muss, sollte klar grösser sein, als die Kräfte, die bei der Betätigung des Standardventils aufgebracht werden. Die Aerosoldose soll das Produkt in der gewohnten Weise durch ein zentrales Austrittsröhrchen abgeben können, ohne dass die Gefahr besteht, dass auch das Ringventil geöffnet wird. Damit der zweite Durchtrittsweg bei einer gefüllten Dose nicht mehr geöffnet werden kann, wird nach dem Befüllen vorzugsweise ein Festsetzschritt durchgeführt, bei dem der Anschlussbereich am Dichtungsbereich des Abschlusselementes festgehalten wird. Dies kann beispielsweise mit einer Verformung am Abschlusselement erzielt werden, wobei die Verformung als Anschlag die unerwünschte Bewegung verhindert.

Die Zeichnungen erläutern die erfindungsgemässe Lösung anhand von Ausführungsbeispielen. Dabei zeigt
- Fig. 1a: einen Vertikalschnitt durch einen Dosenmantel mit Ausbuchtungen bei beiden Stirnseiten,
- Fig. 1b: einen Vertikalschnitt durch einen Dosenkörper mit Ausbuchtungen am Dosenmantel und daran fest geschweissten Abschlusselementen,
- Fig. 2: einen Vertikalschnitt durch eine Aerosoldose mit einem oberen Abschlusselement mit Ventil,
- Fig. 3: einen Teil eines Vertikalschnittes durch eine Aerosoldose mit einem oberen Abschlusselement mit Ventil,
- Fig. 4a, 4b: Ausschnitte aus dem Verbindungsbereich zwischen Dosenmantel und oberem Abschlusselement,
- Fig. 5a, 5b: Ausschnitte aus dem Verbindungsbereich zwischen Dosenmantel und Dosenboden,
- Fig. 6: einen Vertikalschnitt durch ein Doppelventil mit einer Befüll- und einer Austragsöffnung, und
- Fig. 7: Vertikalschnitt durch einen Dosenboden mit Befüllöffnung.

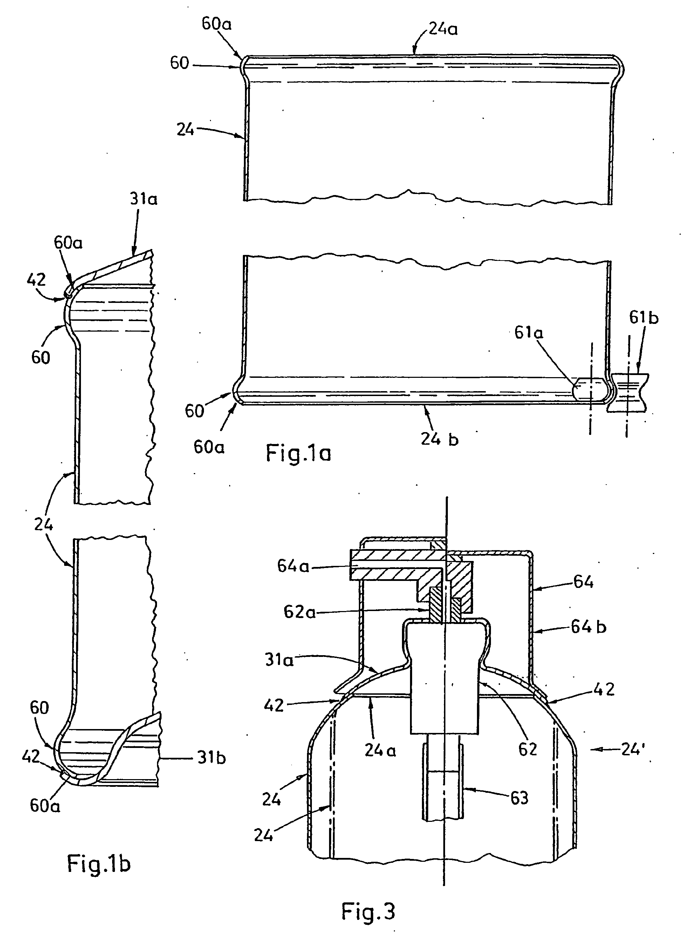

Fig. 1a zeigt einen Dosenmantel 24 mit ringförmigen Ausbuchtungen 60, die bei beiden Stirnseiten 24a und 24b radial nach aussen ausgebildet sind. Bei den Ausbuchtungen entsteht gegen die jeweilige Stirnseite 24a, 24b hin eine Querschnittsverengung. Zum Ausbilden der Ausbuchtungen 60 werden beispielsweise zwei zusammenpassende Formrollen 61 a und 61 b innen und aussen am Dosenmantel 24 angeordnet. Während der Dosenmantel 24 an den Formrollen 61a und 61b vorbei gedreht wird, kann die innere Formrolle 61a radial nach aussen gegen die äussere Formrolle 61b gepresst werden bis die gewünschte Ausbuchtung 60 gebildet ist. Mit einer Ausbuchtung 60 wird ohne Verengungsschritt an mindestens einer Stirnseite 24a, 24b des Dosenmantels 24 eine Schulter 60a bereitgestellt. Aufweitungen sind im Vergleich zu Verengungen wesentlich problemloser mit guter Qualität herzustellen. Mit kleinem Aufwand wird eine Schulter 60a mit glatter Oberfläche erzielt.

Gemäss Fig. 1b werden bei den Ausbuchtungen 60 an die Schultern 60a Abschlusselemente, beispielsweise ein Dosenboden 31 b oder ein oberes Abschlusselement 31 a, gepresst. Mit einer Verbindungsnaht 42 in der Form einer Laserschweissnaht wird eine feste und dichte Verbindung gebildet. Vorzugsweise wird zuerst der Dosenboden 31 b festgeschweisst. Vor oder gegebenenfalls nach dem Festschweissen des oberen Abschlusselementes 31a kann der Dosenmantel 24 noch umgeformt werden, beispielsweise in dem der Dosenquerschnitt zumindest auf den Durchmesser der mindestens einen Ausbuchtung 60 aufgeweitet wird. Vor dem Festschweissen des oberen Abschlusselementes 31 a können zum Aufweiten des Dosenmantels 24 Formwerkzeuge, wie beispielsweise Rollen, in das Doseninnere eingeführt werden. Gegebenenfalls wird zur Aufweitung des Dosenquerschnittes auch ein Fluid unter Druck in das Doseninnere eingebracht und der Dosenmantel 24 in eine Innenform gedrückt. Mit diesem Aufweitungsschritt kann auch ohne das oben beschriebene Ausbilden einer Ausbuchtung 60 direkt eine Schulter 60a gebildet werden.

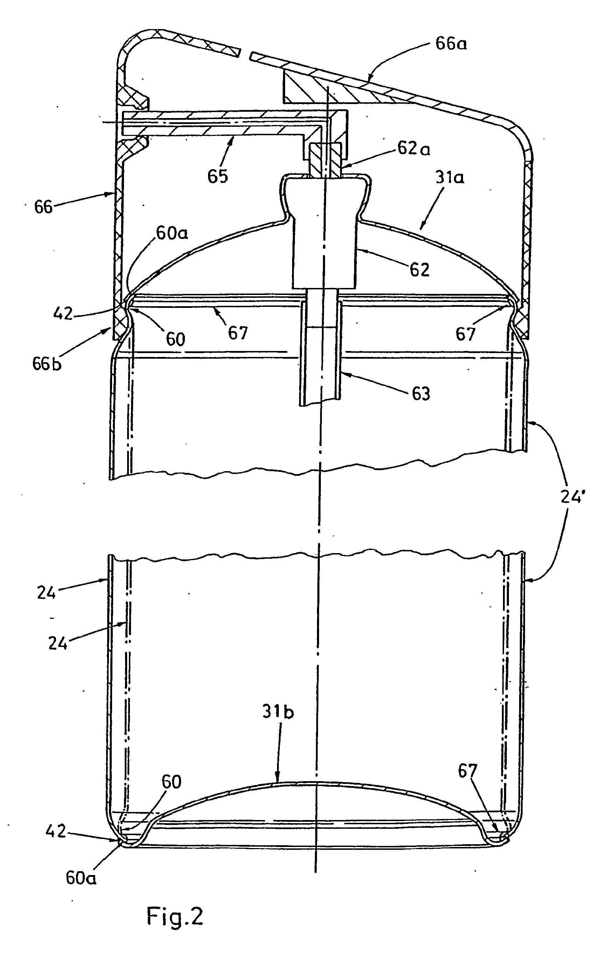

Fig. 2 zeigt eine Aerosoldose 24' die unter Verwendung eines zylindrischen Dosenmantels 24 mit Ausbuchtungen 60 hergestellt wurde. An einer unteren Schulter 60a wurde ein Dosenboden 31 b angeordnet. Der äussere Randbereich des Dosenbodens 31 b ist an die Schulter 60a angepasst, so dass der äussere Rand des Dosenbodens 31 b beim Zusammenpressen dicht an der Schulter 60a anliegt und somit eine präzise und dichte Laserschweissnaht als Verbindungsnaht 42 ausgebildet werden kann. Der Dosenmantel 24 wird vor dem Aufsetzen des oberen Abschlusselementes 31 a von einer ersten zylindrischen Form in eine zweite Form aufgeweitet. Dabei können beispielsweise gewünschte Oberflächenstrukturen erzielt werden. Zum Aufweiten des Dosenmantels 24 werden gegebenenfalls Formwerkzeuge, wie beispielsweise Rollen, in das Doseninnere eingeführt. Vorzugsweise aber wird zur Aufweitung des Dosenquerschnittes ein Fluid unter Druck in das Doseninnere eingebracht und der Dosenmantel in eine Innenform gedrückt, was beispielsweise aus den Patenten EP 853 513 B1, EP 853 514 B1 und EP 853 515 B1 bekannt ist. Die Ausbuchtung 60 an der oberen Stirnseite 24a wird vorzugsweise in der ursprünglichen Form belassen, so dass an die Schulter 60a ein kuppelförmiges oberes Abschlusselement 31a gepresst und mit einer Verbindungsnaht 42 festgeschweisst werden kann.

Das obere Abschlusselement 31a umfasst ein Ventil 62 von dem ein Schlauch 63 gegen den Dosenboden 31 b führt und das über ein Austragsröhrchen 62a betätigt werden kann. Ein auf das Austragsröhrchen 62a gesteckter Austragsteil 65 ist in einer Kappe 66 gehalten. Um das Ventil 62 zu betätigen wird ein Betätigungsbereich 66a der Kappe 66 auf den Austragsteil 65 gedrückt. Dabei wird das Austragsröhrchen 62a nach unten gedrückt und damit das Ventil 62 geöffnet. Die Kappe 66 ist mit einem Einrastbereich 66b in einer entsprechenden Einrastform des Dosenmantels 24 gehalten. Die Einrastform des Dosenmantels 24 wird gegebenenfalls von der Ausbuchtung 60 oder einem verengten Bereich zwischen der Ausbuchtung 60 und dem ausgeweiteten Bereich des Dosenmantels 24 gebildet. Gegebenenfalls kann die Einrastform auch vom äusseren Rand des oberen Abschlusselementes 31a bzw. von der Verbindungsnaht 42 gebildet werden.

Die Kappe 66 überdeckt das obere Abschlusselement 31 a und gewährleistet zusammen mit dem Dosenmantel 24, welcher vorzugsweise eine Dekorfolie umfasst, ein attraktives Erscheinungsbild, das dem einer einteiligen Aludose entspricht. Es sind auch Ausführungsformen möglich bei denen Dosenmantel 24 und Dosenboden einteilig ausgebildet sind, oder bei denen die Verbindungsnaht 42 zwischen Dosenmantel 24 und Dosenboden 31 b von einer Bodenabdeckung überdeckt sind. Selbst wenn die Verbindungsnaht 42 beim Dosenboden sichtbar ist, ist sie als dünne Laserschweissnaht kaum erkennbar. Um eine Oxydation der Verbindungsnaht 42 zu verhindern, wird sie gegebenenfalls mit einer Beschichtung abgedichtet.

Um auch im Doseninnern eine durchgehende Innenbeschichtung zu gewährleisten, werden der Dosenmantel 24, der Dosenboden 31b und das obere Abschlusselement auf der Innenseite mit einer Schutzschicht, in der Form einer Folie oder einer Beschichtung, versehen. Bei den Verbindungsnähten 42 wird gegebenenfalls Dichtungsmaterial 67 ringförmig angeordnet, welches auch nach dem Ausbilden der Verbindungsnähte 42 eine durchgängige Dichtungsschicht gewährleistet. Damit die Laserschweissung nicht durch Beschichtungen gestört wird, können die aneinander anliegenden Teile im Bereich der Lasernaht vor der Laserschweissung mit einem Laser zur Entfernung der Beschichtung behandelt werden. Die Innenbeschichtung wird dadurch nicht beeinträchtigt.

Fig. 3 zeigt den oberen Teil einer Aerosoldose 24', bei welcher der Dosenmantel 24 an einer verengten Stirnseite 24a mit einem kuppelförmigen oberen Abschlussetement 31 a über die Verbindungsnaht 42 verbunden ist. Der Dosenmantel 24 wird gegebenenfalls vor dem Aufsetzen des oberen Abschlusselementes 31a von einer ersten zylindrischen Form in eine zweite Form aufgeweitet. Dabei können beispielsweise gewünschte Oberflächenstrukturen erzielt werden. Das Abschlusselement 31a umfasst ein Ventil 62 von dem ein Schlauch 63 zum Dosenboden führt und das über ein Austragsröhrchen 62a betätigt werden kann. Der auf das Austragsröhrchen 62a gesteckte Sprühkopf 64 umfasst einen Austragskanal 64a und eine Hülle 64b. Die Hülle 64b erstreckt sich radial nach aussen und axial gegen das obere Abschlusselement 31 a vorzugsweise soweit, dass die Verbindungsnaht 42 im Wesentlichen überdeckt wird und somit das obere Abschlusselement 31 a nicht sichtbar ist. Die Aerosoldose 24' tritt nur mit dem Dosenmantel, der eine Dekorschicht umfasst, und mit dem Sprühkopf 64 in Erscheinung.

Mit der beschriebenen Ausbildung der verschweissten Teile, ist das Festschweissen eines oberen Abschlusselementes 31a mit dem Ventil 62 sehr vorteilhaft. Durch das Festschweissen des oberen Abschlusselementes 31 a werden Mikroleckagen ausgeschlossen. Die Befüllung der Aerosoldose 24' erfolgt vor dem Aufsetzen des Sprühkopfes 64 durch Austragsröhrchen 62a.

Nach dem Festschweissen des Abschlussteiles mit dem Ventil kann von aussen keine Innenabdeckung der Schweissnaht ins Doseninnere gebracht werden. Es stellt sich somit die Aufgabe, bei Dosen mit einem am Dosenmantel festgeschweissten Ventilteil eine durchgehende Barriere, bzw. eine Beschichtung, an der Doseninnenwand gewährleisten zu können.

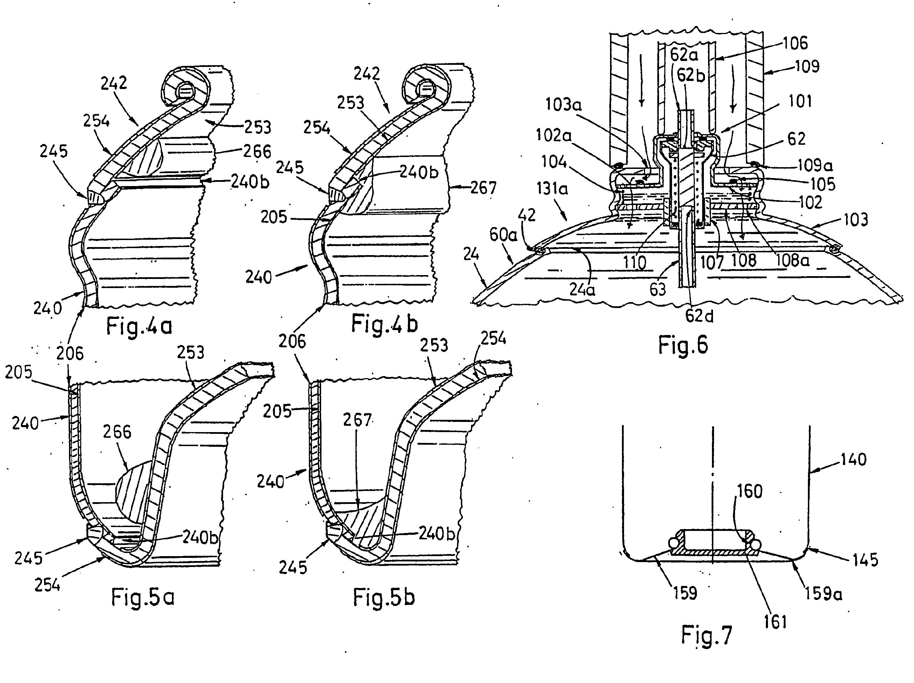

Die Ausführungsformen gemäss der Figuren 4a, 4b, 5a, 5b zeigen eine Lösung mit der eine durchgängige Innenbarrieren aus Kunststoff gewährleistet werden kann. Dabei ist an der Innenseite des Dosenmantels 240 eine Innenfolie 205 angeordnet. Die Innenseite des Abschlusselementes 242 umfasst eine Innenbeschichtung 253. Beim Laserschweissen der Abschlussnaht 245 wird die Innenfolie 205 gegebenenfalls im Nahtbereich zerstört. Um den Nahtbereich und die Stirnfläche 240b des Dosenmantels 240 innen abdichten zu können, wird eine Dichtungswulst 266 ringförmig am Abschlusselement 242 angebracht. Nach dem Schweissen der Abschussnaht 245 wird im Bereich der Dichtungswulst Wärme zugeführt, so dass das schmelzbare Material der Dichtungswulst soweit fliesst, dass die Stirnfläche 240b und gegebenenfalls der Nahtbereich überdeckt sind. Am Ende des Fliessvorganges wird das Material der Dichtungswulst gekühlt, bzw. nicht mehr erwärmt, so dass es fest wird und eine durchgehende Dichtungsbrücke 267 zwischen der Innenfolie 205 und der Innenbeschichtung 253 des Abschlusselementes 242 bildet, die sich insbesondere auch über die Abschlussnaht 245 erstreckt. Um ein kontrolliertes Fliessen zu gewährleisten, muss das Material der Dichtungswulst bei der gewählten Temperatur die gewünschte Fliessfähigkeit haben. Gegebenenfalls wird der Dosenkörper zur Verbesserung des Fliessverhaltens um die Längsachse in Drehung versetzt. Dabei kann es zweckmässig sein die Dosenachse so auszurichten, dass zumindest ein Bereich der abzudeckenden Stirnfläche 240b und Abschlussnaht 245 in einer vertikalen Längsebene am tiefsten liegt.

Auf der Aussenseite des Dosenmantels 240 ist vorzugsweise eine Dekorfolie 206 angebracht. Das Abschlusselement 242 umfasst insbesondere eine Aussenbeschichtung 254. Die aneinander anliegenden Naht-Kontaktflächen sind beim Schweissen der Abschlussnaht 245 vorzugsweise unbeschichtet. Um eine unschöne Oxidation an der Dosenaussenseite ausschliessen zu können, wird die Abschlussnaht 245 gegebenenfalls so mit einem Beschichtungsmaterial ringförmig überdeckt, dass sich das Beschichtungsmaterial von der Aussenbeschichtung 254 bis zur Dekorfolie 206 erstreckt. Beim Einsetzen einer Bodenabdeckung 242' oder einer fest montieren Kappe 66 kann auf eine zusätzliche Überdeckung der Abschlussnaht verzichtet werden.

Fig. 6 zeigt das obere Ende einer Aerosoldose mit einem Abschlusselement 131 a, das ein Doppelventil 101 umfasst. Am oberen Ende des Dosenmantels 24 ist gegen die Stirnseite 24a hin eine schulterförmige Querschnittsverengung bzw. eine Schulter 60a ausgebildet. Der an diese Schulter 60a anliegende Randbereich des Abschlusselementes 31 a ist dicht angepresst sowie mit einer Laser Verbindungsnaht 42 dicht verbunden. Die Stirnseiten der beiden Kontaktbereiche sind entgegengesetzt ausgerichtet und die Stirnseite 24a des Dosenmantels 24 liegt im Doseninnern. Die in einem Vertikalschnitt schulterförmigen Nahtkontaktbereiche sind beide kuppelförmig aneinander angepasst, so dass sie beim Zusammenpressen an einen Anschlag gelangen, bei dem entlang der Verbindungsnaht ein luftfreier Kontakt gewährleistet ist. Zum Erzielen des luftfreien Kontaktes muss keine Halterung direkt bei der Naht eingesetzt werden. Die kuppelförmige Ausgestaltung der Nahtkontaktflächen ist im Vergleich zu zylindrischen und zu radial nach aussen stehenden Flanschen wesentlich vorteilhafter, weil sie beim Zusammenpressen eine gemeinsame Formstabilität und damit den luftfreien Kontakt gewährleistet. Bereits eine kleine Überlappung ermöglicht das Ausbilden der dichten Lasernaht. Der Materialbedarf für diese Naht ist sehr klein und die Verbindung ist ästhetisch sehr vorteilhaft.

Das dargestellte Doppelventil 101 kann zwei getrennte Durchtrittswege mit unterschiedlich grossen Querschnitten bereitstellen. Der erste Durchtrittsweg wird von einem Standard-Dosenventil 62 gebildet. Der zweite Durchtrittsweg wird zwischen einem inneren Verbindungsteil 102 des Standardventils und einem mit dem Dosenmantel verbundenen äusseren Verbindungsteil 103 ausgebildet. Dazu wird der innere Verbindungsteil 102, so ausgebildet, dass ein Schliessbereich vom Doseninnern her von einer zweiten Feder 104 gegen einen passenden Schliessbereich des äusseren Verbindungsteil 103 gepresst wird. Der äussere Verbindungsteil 103 ist am radial äusseren Rand über die Laser Verbindungsnaht 42 mit dem Dosenmantel 24 bzw. der Schulter 60a verbunden. Im verschlossenen Zustand verschliesst ein Dichtungsring 105 bei den Schliessbereichen den Durchgang zwischen dem inneren und dem äusseren Verbindungsteil 102, 103.

Mit einer Aufpresshülse 106 kann der innere Verbindungsteil 102 gegen das Doseninnere gedrückt werden. Dabei entsteht ein Durchtrittsweg von aussen durch eine zentrale erste Durchtrittsöffnung 103a des äusseren Verbindungsteils 103, durch den offenen Schliessbereich, über den Dichtungsring 105 und durch zweite Durchtrittsöffnungen 102a des inneren Verbindungsteils 102. Das Gehäuse des Ventils 62 ist fest mit dem inneren Verbindungsteil 102 verbunden. Die Bewegung des inneren Verbindungsteils 102 relativ zum äussere Verbindungsteil 103 wird von mindestens einem, vorzugsweise aber von zwei Führungsbereichen geführt. Ein erster Führungsbereich ist zwischen dem äusseren Rand des inneren Verbindungsteils 102 und dem angrenzenden zylindrischen Abschnitt des äusseren Verbindungsteils 103 gebildet. Ein zweiter Führungsbereich wird beispielsweise von einer Hülse 107 gebildet, die das Ventil 62 am zylindrischen unteren Ende umschliesst. Die Hülse 107 wird über eine Haltescheibe 108 mit dritten Durchtrittsöffnungen 108a am zylindrischen Abschnitt des äusseren Verbindungsteils 103 gehalten. Dazu ist die Haltescheibe 108 beispielsweise am äusseren Verbindungsteil 103 festgeklemmt. Die zweite Feder 104 liegt an der Haltescheibe 108 an und presst das innere Verbindungsteil 102 in die Schliessposition des zweiten Durchtrittsweges.

Beim Befüllen der Dose mit einem flüssigen Produkt wird ein Füllrohr 109 mit einem stirnseitigen Dichtungsring zentrisch ans äussere Verbindungsteil 103 angelegt. Die Aufpresshülse 106 öffnet den zweiten Durchtrittsweg, so dass das Produkt aus dem Füllrohr 109 durch die Durchtrittsöffnungen ins Doseninnere einströmen kann. Anschliessend wird die Aufpresshülse 106 zurückgezogen und die zweite Feder drückt das innere Verbindungsteil 102 in die Schliessposition. Gegebenenfalls wird in der Schliessposition mit einem Klemmschritt das innere Verbindungsteil 102 am äusseren Verbindungsteil 103, insbesondere am zylindrischen Abschnitt, festgeklemmt.

Nach dem Einfüllen des Produktes wird durch das Standard-Dosenventil 62 Treibgas eingetragen. Dazu wird das Austragsröhrchen 62a etwas gegen das Doseninnere gedrückt, bis eine erste radiale Bohrung 62b mit einem Ringraum 62c verbunden ist. Vom Ringraum 62c führt eine zweite radiale Bohrung 62d in den Schlauch 63, so dass das Treibgas in den Doseninnenraum gelangt. Im Ringraum 62c ist auch die erste Feder 110 angeordnet, welche das Austragsröhrchen 62a in die Position drückt, in welcher der erste Durchtrittsweg verschlossen ist. Zum Austragen des Produktes wird das Standard-Ventil in der gewohnten Weise betätigt.

Auf einen zweiten Durchtrittsweg am oberen Dosenabschluss kann verzichtet werden, wenn bei einer Dose mit bereits eingesetztem Ventil das Produkt durch eine in der Fig. 7 dargestellte Befüllöffnung eingefüllt werden kann. Nach dem Einfüllen durch die Befüllöffnung wird das Treibgas durch das Ventil eingetragen.

Fig. 7 zeigt einen Befüll-Dosenabschluss 159, der mit der Abschlussnaht 145 am Dosenmantel 140 fest geschweisst wird und eine Befüllöffnung 160 umfasst, die nach dem Befüllen mit einem Verschlusselement 161 dicht verschlossen wird. Das Verschlusselement 161 kann fest gecrimpt oder auch einfach eingepresst werden. Damit der Befüll-Dosenabschluss 159 mit der verschlossenen Befüllöffnung 160 als Boden der befüllten Dose erscheint, steht dessen mittlerer Bereich etwas ins Doseninnere vor und ein äusserer ringförmiger Auflagebereich 159a bildet die Standfläche der Dose.

## Patentansprüche

1. Verfahren zum Festsetzen eines Ventilteils mit einer Verbindungsschale und einem Ventil (62) an einem Dosenmantel (24), wobei die Verbindungsschale des Ventilteils als oberes Abschlusselement (31a) mit dem Ventil (62) mittels Laserschweissen am Dosenmantel (24) befestigt wird, **dadurch gekennzeichnet, dass** am Dosenmantel (24) gegen die Stirnseite (24a) hin eine schulterförmige Querschnittsverengung ausgebildet ist, der an diese Schulter (60a) anliegende Randbereich des Abschlusselementes (31 a) dicht angepresst sowie mit einer Laser Verbindungsnaht (42) dicht verbunden wird und die Stirnseite (24a) des Dosenmantels (24) im Doseninnern liegt.

2. Verfahren nach Anspruch 1, **dadurch gekennzeichnet, dass** der Dosenmantel (24) und das Abschlusselement (31a) auf der Innenseite mit einer Schutzschicht versehen sind und bei der Verbindungsnaht (42) Dichtungsmaterial (67) ringförmig angeordnet ist, welches Dichtungsmaterial (67) auch nach dem Ausbilden der Verbindungsnaht (42) eine durchgängige Schutzschicht gewährleistet.

3. Verfahren nach Anspruch 1 oder 2, **dadurch gekennzeichnet, dass** das mindestens eine Abschlusselement (142, 242) auf der Innenseite eine Kunststoff-Innenbeschichtung (153, 253) und eine ringförmig geschlossene Dichtungswulst (266) umfasst, wobei die Dichtungswulst (266) nach dem Ausbilden der Abschlussnaht (245) mittels eines Schmelzschrittes zum Fliessen gebracht und die im Doseninnern liegende Stirnfläche (140b, 142b, 240b) des Dosenmantels (24) vom Material der Dichtungswulst (266) überdeckt wird.

4. Verfahren nach Anspruch 3, **dadurch gekennzeichnet, dass** auch die Laser Verbindungsnaht (145, 42, 245) vom Material der Dichtungswulst (266) überdeckt wird.

5. Dosenkörper (24') mit einem geschlossenen Dosenmantel (24) an dem stirnseitig ein Ventilteil mit einer Verbindungsschale und einem Ventil (62) angeordnet ist, wobei eine Laser Verbindungsnaht (42) ausgebildet ist mit welcher die Verbindungsschale des Ventilteils als oberes Abschlusselement (31a) mit dem Ventil (62) am Dosenmantel (24) befestigt ist, **dadurch gekennzeichnet, dass** am Dosenmantel (24) gegen die Stirnseite (24a) hin eine schulterförmige Querschnittsverengung ausgebildet ist, der an diese Schulter (60a) anliegende Randbereich des Abschlusselementes (31a) dicht angelegt sowie über die Laser Verbindungsnaht (42) dicht verbunden ist und die Stirnseite (24a) des Dosenmantels (24) im Doseninnern liegt.

6. Dosenkörper (24') nach Anspruch 5, **dadurch gekennzeichnet, dass** der Dosenmantel (24) und das Abschlusselement (31 a) auf der Innenseite mit einer Schutzschicht versehen sind, bei der Verbindungsnaht (42) Dichtungsmaterial (67) ringförmig angeordnet ist und vom Dichtungsmaterial (67) auch bei der Laser Verbindungsnaht (42) eine durchgängige Dichtungsschicht gewährleistet ist.

7. Dosenkörper (24') nach Anspruch 5 oder 6, **dadurch gekennzeichnet, dass** das mindestens eine Abschlusselement (142, 242) auf der Innenseite eine Kunststoff-Innenbeschichtung (153, 253) und eine ringförmig geschlossene Dichtungswulst (266) umfasst, wobei die Dichtungswulst (266) zum Fliessen gebracht wurde und die im Doseninnern liegende Stirnfläche (140b, 142b, 240b) des Dosenmantels (24) überdeckt.

8. Dosenkörper (24') nach Anspruch 7, **dadurch gekennzeichnet, dass** auch die Laser Verbindungsnaht (145, 42, 245) vom Material der Dichtungswulst (266) überdeckt ist.

9. Dosenkörper (24') nach Anspruch 5, **dadurch gekennzeichnet, dass** das Ventilteil zwei unterschiedlich grosse Durchtrittsquerschnitte bereitstellt, wobei ein erster Querschnitt für das Eintragen des Treibgases sowie das Austragen des Produktes und ein zweiter Querschnitt für das Einfüllen des Produktes ausgebildet ist.

10. Dosenkörper (24') nach Anspruch 5, **dadurch gekennzeichnet, dass** am Dosenboden eine verschliessbare Befüllöffnung ausgebildet ist.

## Claims

1. A method for fixing a valve portion, having a connection cup and a valve (62), to a can jacket (24), wherein the connection cup of the valve portion is secured with the valve (62) to said can jacket (24) as an upper closing element (31 a) by means of laser welding, **characterised in that** a shoulder-like cross-sectional restriction is formed on said can jacket (24) towards the front side (24a), and that that border region of said closing element (31 a), which engages this shoulder (60a), is tightly pressed on and is tightly connected by a laser connection seam (42), wherein said front side (24a) of said can jacket (24) is situated in the can's interior.

2. Method according to claim 1, **characterised in that** said can jacket (24) and said closing element (31 a), at the inner side, are provided with a protecting coating and sealing material (67) is arranged in an annular shape at said connection seam (42), said sealing material (67) ensuring a continuous protecting coating even after forming said connection seam (42).

3. Method according to claim 1 or 2, **characterised in that** the at least one closing element (142, 242), at the inner side, comprises a plastic inner coating (153, 253) and a sealing bulge (266) closed in an annular shape, said sealing bulge (266), having formed the closing seam (245), is made flowing by means of a fusing step, and the front surface (140b, 142b, 240b) of the can jacket (24), which is situated in the can's interior, is covered by the material of said sealing bulge (266).

4. Method according to claim 3, **characterised in that** the laser connection seam (145, 42, 245) is also covered by the material of said sealing bulge (266).

5. Can body (24') comprising a closed can jacket (24), at the front side of which a valve portion, having a connection cup and a valve (62), is arranged, wherein a laser connection seam (42) is provided, by which said connection cup of said valve portion is secured to the can jacket (24) as an upper closing element including said valve (62), **characterised in that** a shoulder-like cross-sectional restriction is formed on said can jacket (24) towards the front side (24a), and that that border region of said closing element (31 a), which engages this shoulder (60a), is tightly engaging and is tightly connected by the laser connection seam (42), wherein said front side (24a) of said can jacket (24) is situated in the can's interior.

6. Can body (24') according to claim 5, **characterised in that** said can jacket (24) and said closing element (31 a), at the inner side, are provided with a protecting coating, sealing material (67) is arranged in an annular shape at said connection seam (42), and sealing material (67) ensures a continuous protecting coating even at said connection seam (42).

7. Can body (24') according to claim 5 or 6, **characterised in that** the at least one closing element (142, 242), at the inner side, comprises a plastic inner coating (153, 253) and a sealing bulge (266) closed in an annular shape, said sealing bulge (266) has been made flowing and covers the front surface (140b, 142b, 240b) of the can jacket (24), which is situated in the can's interior.

8. Can body (24') according to claim 7, **characterised in that** the laser connection seam (145, 42, 245) is also covered by the material of the sealing bulge (266).

9. Can body (24') according to claim 5, **characterised in that** said valve portion provides for two passage cross-sections of different size, a first cross-section being formed for introducing propellant gas and for discharging the product, and a second cross-section being formed for filling the product in.

10. Can body (24') according to claim 5, **characterised in that** a closable filling opening is formed at the can's bottom.

## Revendications

1. Procédé pour fixer une partie de soupape, incluant une coupe de connexion et une soupape (62), à une enveloppe de contenant (25), dans lequel la coupe de connexion de la partie de soupape est fixée à l'enveloppe de contenant (24) au moyen de soudure à laser comme un élément supérieur de fermeture (31 a) avec la soupape (62), **caractérisé en ce, qu**'une restriction de section en forme d'épaule est formée à l'enveloppe de contenant (24) vers le côté frontal (24a), que la zone de bord de l'élément de fermeture (31 a), qui porte bien à cette épaule (60a), est pressée d'une façon étanche et est reliée d'une façon étanche par une soudure de connexion à laser (42), et que le côté frontal (24a) de l'enveloppe de contenant (24) est situé à l'intérieur de contenant.

2. Procédé selon la revendication 1, **caractérisé en ce, que** l'enveloppe de contenant (24) et l'élément de fermeture (31 a) sont pourvus d'une couche protectrice au côté intérieur, qu'un matériau d'étanchéité (67) en forme annulaire est disposé auprès de la soudure de connexion (42), ledit matériau d'étanchéité (67) garantissant une couche protectrice continuelle même après la formation de la soudure de connexion (42).

3. Procédé selon la revendication 1 ou 2, **caractérisé en ce, que** ledit au moins un élément de fermeture (142, 242) comprend au côté intérieur une couche intérieur synthétique (153, 253) et un bourrelet d'étanchéité (266) fermé en forme d'anneau, ledit bourrelet d'étanchéité (266) est fait à couler après la formation de la soudure de fermeture (245) à l'aide d'une étape de fusion, et que la surface frontale (140b, 142b, 240b), située à l'intérieur du contenant, de l'enveloppe de contenant (24) est couverte du matériau dudit bourrelet d'étanchéité (266).

4. Procédé selon la revendication 3, **caractérisé en ce, que** la soudure de connexion à laser (145, 42, 245) aussi est couverte du matériau dudit bourrelet d'étanchéité (266).

5. Corps de contenant (24') comprenant une enveloppe fermée de contenant (24), à laquelle une partie de soupape, incluant une coupe de connexion et une soupape (62), est disposée au côté frontal, dans lequel une soudure de connexion à laser (42) est prévue, avec laquelle la coupe de connexion de la partie de soupape est attachée à l'enveloppe de contenant (24) comme un élément supérieur de fermeture (31 a) avec la soupape (62), **caractérisé en ce, qu**'une restriction de section en forme d'épaule est formée à l'enveloppe de contenant (24) vers le côté frontal (24a), que la zone de bord de l'élément de fermeture (31 a), qui porte bien à cette épaule, est collée d'une façon étanche et est reliée d'une façon étanche par une soudure de connexion à laser (42), et que le côté frontal (24a) de l'enveloppe de contenant (24) est situé à l'intérieur de contenant.

6. Corps de contenant (24') selon la revendication 5, **caractérisé en ce, que** l'enveloppe de contenant (24) et l'élément de fermeture (31 a), au côté intérieur, sont pourvus d'une couche protectrice, que de matériau d'étanchéité (67) est disposé en forme annulaire chez la soudure de connexion (42), une couche d'étanchéité continue étant garantie chez la soudure de connexion à laser (42) aussi par le matériau d'étanchéité.

7. Corps de contenant (24') selon la revendication 5 ou 6, **caractérisé en ce, que** ledit au moins un élément de fermeture (142, 242) comprend au côté intérieur une couche intérieur synthétique (153, 253) et un bourrelet d'étanchéité (266) fermé en forme d'anneau, ledit bourrelet d'étanchéité (266) a été fait à couler et couvre la surface frontale (140b, 142b, 240b), située à l'intérieur du contenant, de l'enveloppe de contenant (24).

8. Corps de contenant (24') selon la revendication 7, **caractérisé en ce, que** la soudure de connexion à laser (145, 42, 245) est couverte du matériau dudit bourrelet d'étanchéité (266).

9. Corps de contenant (24') selon la revendication 5, **caractérisé en ce, que** la partie de soupape établit deux sections de passage d'une grandeur différente, une première section étant formée pour l'introduction de gaz propulseur et pour la décharge du produit, et une deuxième section est formée pour verser le produit.

10. Corps de contenant (24') selon la revendication 5, **caractérisé en ce, qu**'une ouverture de remplissage fermant à serrure est formé au fond de contenant.
